# EUROPEAN PATENT APPLICATION

(11) **EP 1 050 841 A2**
(43) Date of publication of application: **08.11.2000**
(21) Application number: 00303858.5
(22) Date of filing: 08.05.2000
(51) Int. Cl.: G06K 7/00

(54) **Interrogator for electronic identification system**

(30) Priority: 07.05.1999 ZA 9903169
(71) Applicant: Supersensor (Proprietary) Limited, Midrand 1685, Gauteng (ZA)
(72) Inventor: Turner, Christopher G.G., Remainder of 256, Halfway House, Gauteng (ZA); Proctor, David Edwin, North Riding, Randburg 2040 (ZA)
(74) Representative: Cross, James Peter Archibald

(57) **Abstract**

An interrogator (12) for an electronic radio frequency identification system (10) comprises an antenna (16); a signal generator (20) for generating a first signal (18); and a transmission line (22) connecting the generator to the antenna to provide a path for the first signal to propagate in a first direction A towards the antenna for transmission thereby. A first demodulator 24 is coupled to the transmission line by a directional coupler (28.1, 28.2). The directional coupler is operative to attenuate at the demodulator signals propagating in the first direction, but to couple to the demodulator signals propagating in a reverse direction B. The signals propagating in the reverse direction include a response signal from an external transponder received via the antenna and a reflection of the first signal from the antenna. The first demodulator is operative to demodulate the response signal utilizing the reflection of the first signal as a local oscillator signal.

## Description

THIS invention relates to electronic, radio frequency identification systems. The invention more particularly relates to an interrogator or energizer plus reader for reading remote transponders forming part of the system. The invention also relates to a method of processing signals in the reader.

A known interrogator for a system of the aforementioned kind includes a transmitter connected via a transmission line to a single antenna. In use, an energizing or interrogation signal generated by the transmitter propagates forwardly towards the antenna and is transmitted via the antenna. Response signals from transponders are received via the antenna and propagate in the reverse direction on the transmission line. Quadrature demodulators are connected in spaced relation directly to the transmission line to detect and demodulate the response signals. A similar configuration is disclosed in US 4,360,810 to Landt, in relation to radar equipment.

The disadvantages of the aforementioned interrogator is that diodes of the aforementioned demodulators, which are connected directly to the transmission line, are unable to cope even with moderately high levels of forwardly propagating energizing power. Hence, the diodes are susceptible to damage by higher power levels. This limits the output power that may be generated by the transmitter and accordingly clearly places a ceiling on the operational distance over which the interrogator can function.

Furthermore, the configuration does not discriminate between forwardly propagating power on the one hand and power propagating in the reverse direction on the other. The presence of the carrier of the forwardly propagating energizing signal in the demodulators adds substantially to the noise in the demodulators and may even swamp the signals received from the transponders and which must be detected and demodulated by the demodulators.

### OBJECT OF THE INVENTION

Accordingly it is an object of the present invention to provide a radio frequency electronic identification system, an interrogator for a radio frequency identification system and a method of processing signals with which the applicant believes the aforementioned disadvantages may at least be alleviated.

### SUMMARY OF THE INVENTION

According to the invention there is provided an interrogator for an electronic radio frequency identification system, the interrogator comprising:
- an antenna;
- a signal generator for generating a first signal;
- a transmission line connecting the generator to the antenna to provide a path for the first signal to propagate in a first direction towards the antenna for transmission thereby; and
- at least a first demodulator coupled to the transmission line by a first directional coupling means;
- the directional coupling means being operative to attenuate at the demodulator signals propagating in the first direction, but to couple to the demodulator signals propagating in a reverse direction, said signals comprising a second signal received via the antenna and a reflection of the first signal from the antenna; and
- the first demodulator being operative to demodulate the second signal utilizing the reflection of the first signal.

The first signal may be an energizing signal for energizing passive transponders to be read and the second signal may be a response signal from a transponder. In other embodiments the first signal may be an interrogation signal for interrogating active transponders.

The interrogator may further comprise a second demodulator coupled to the transmission line by a second directional coupling means, the first and second coupling means being spaced along the line, so that the first and second demodulators provide phase diversified demodulated signals.

An input impedance of the antenna may be mismatched slightly to an impedance of the line (such that the VSWR is between 1.2:1 and 2:1) to reflect some of the forwardly propagating first signal back towards the transmitter, so as to provide the aforementioned reflection and so that the coupling means is operative to couple the reflection and not the forwardly propagating signal to the demodulators, thus avoiding the forwardly propagating first signal on diodes of the demodulators while providing the demodulators with the local oscillator power they require.

The demodulators may be balanced and arranged to utilize the reflection as a local oscillator signal and to convert the second signal directly to baseband.

The transmission, line may be a strip line.

The first and second directional coupling means may each comprise first and second coupled lines provided adjacent the strip line.

The first and second coupled lines of the first and second coupling means may be interleaved. In other embodiments the first and second coupled lines of the first coupling means may be adjacent one another, but suitably spaced from one another, and the first and second coupled lines of the second coupling means may be adjacent one another and suitably spaced from the coupled lines of the first coupling means, to provide suitable phase diversity.

Also included within the scope of the present invention is an electronic identification system including a plurality of RF transponders and an interrogator as hereinbefore defined.

Yet further included within the scope of the present invention is a method of processing signals in an interrogator of an electronic identification system, the method comprising the steps of:
- generating a first signal and causing it to propagate in a first direction along a transmission line before being transmitted via an antenna;
- receiving modulated response signals in response to the first signal from transponders forming part of the system via the antenna and causing them to propagate in a second or reverse direction along the transmission line;
- causing a part of the first signal to be reflected by the antenna in the reverse direction along the transmission line;
- directionally coupling the received response signals and the part of the first signal to at least one demodulator; and
- utilizing in the demodulator the part of the first signal to demodulate the response signals.

### BRIEF DESCRIPTION OF THE ACCOMPANYING DIAGRAMS

The invention will now further be described, by way of example only, with reference to the accompanying diagrams wherein:
- figure 1: is a block diagram of an electronic radio frequency identification system according to the invention;
- figure 2: is a block diagram of an interrogator or energizer plus reader forming part of the system; and
- figure 3: is a more detailed diagram of part of the interrogator.

### DESCRIPTION OF A PREFERRED EMBODIMENT OF THE INVENTION

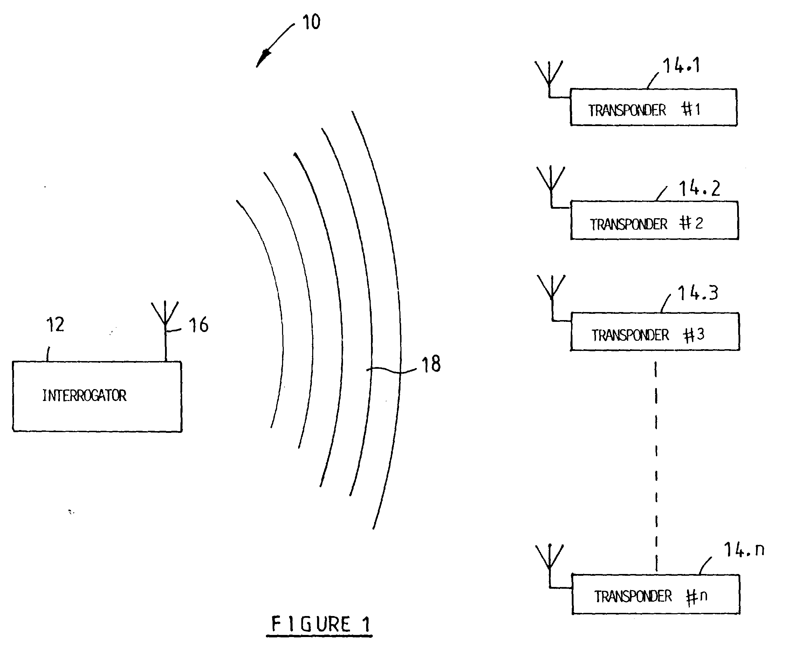

An electronic radio frequency (RF) identification system according to the invention is generally designated by the reference numeral 10 in figure 1.

The system includes an interrogator 12 or energizer plus reader and a plurality of remote and spaced passive or active transponders 14.1 to 14.n. In the case of passive transponders, the interrogator transmits via antenna 16 a first or energizing signal 18 having a nominal carrier frequency f_{c} towards the transponders. The transponders are energized by the energizing signal 18 and transmit response signals by back-scatter modulating the signal 18 with respective identification (ID) code data stored in the transponders and which data is characteristic of respective transponders.

The back-scatter modulated response signals from the various transponders are received via antenna 16 and the data read by the interrogator 12 in sequential manner. The data read may be utilized by the interrogator to count the transponders or articles (not shown) acting as hosts for the transponders and/or to identify the articles.

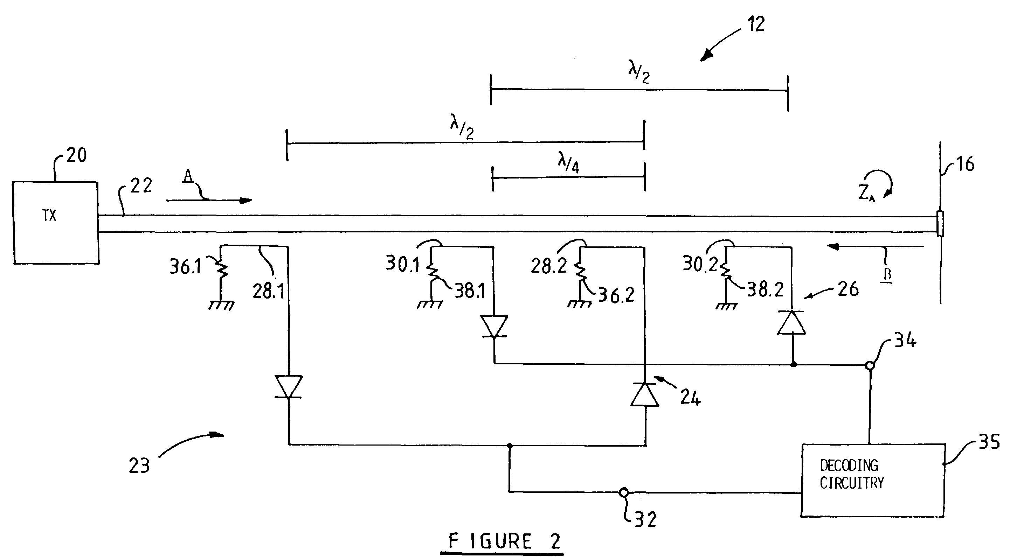

Referring to figure 2, the interrogator 12 includes an energizing signal transmitter 20 connected via a transmission line in the form of strip line 22 to a transmit and receive antenna 16. Energizing signal 18 propagates in a first or forward direction A along line 22 to be transmitted by antenna 16. The interrogator further includes a reader or receiver 23 including first and second balanced demodulators 24 and 26 which are inductively coupled via directional couplers including coupled lines 28.1, 28.2 and 30.1, 30.2 to the transmission line 22. The couplers serve to couple to the demodulators 24, 26 signals propagating in a second or reverse direction B and which signals comprise response signals received from the transponders 14.1 to 14.n via antenna 16, as well as a reflection from the antenna of part of the energizing signal 18.

The antenna impedance Z_{A} is deliberately mismatched inductively, to cause part of the energizing signal 18 to be reflected back from the antenna 16 along the transmission line. This reflected signal is also coupled to the demodulators by the directional couplers and is used as a local oscillator signal in the demodulators 24, 26. The mismatching is such that the VSWR is between 1.2:1 and 2:1.

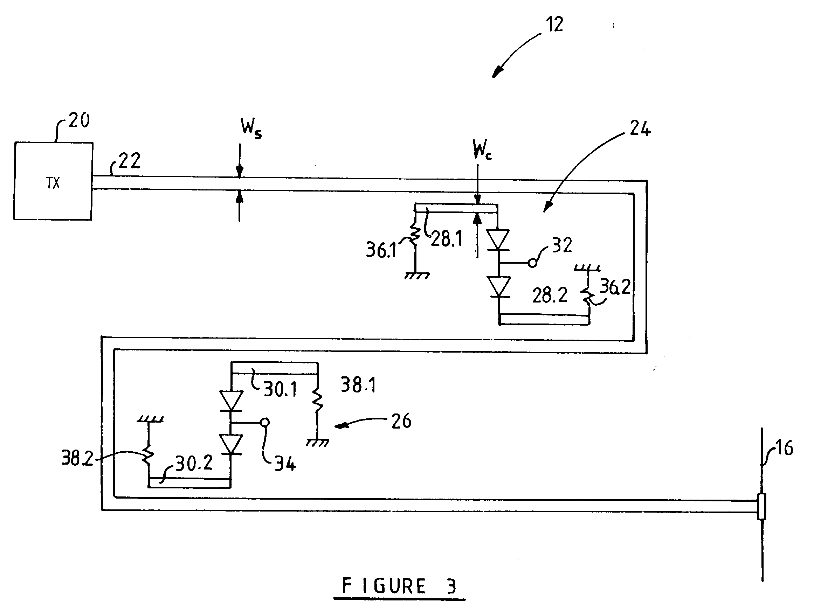

Referring to figure 3, the width wₛ of the strip line 22 and the width w_{c} of the coupled lines are chosen such that the characteristic impedance (Z₀) of the lines is in the order of 50 ohm. Due to their spacing along transmission line 22, the demodulators 24, 26 provide phase diversified (more particularly quadrature), directly converted baseband output signals at outputs 32 and 34. The outputs are connected to decoding circuitry 35 of the receiver 23.

In figure 2, the demodulators 24 and 26 are shown interleaved with one another. The distances between the coupled lines and directional couplers are multiples of quarter wavelengths of the carrier frequency f_{c}. Any other suitable spacing may also be provided to provide a desired phase diversity. The diversity serves to avoid the known problems in systems of the kind in question of nulls and dead spots caused by multi-path propagation of the energizing and response signals and the distance between the transponders 14.1 to 14.n and the interrogator 12. In other embodiments, such as that shown in figure 3, the demodulators 24,26 are separate and spaced from one another.

By means of the directional couplers, energy in the energizing signal 18 propagating in the first direction towards antenna 16, is routed away from the demodulators 24, 26 and is dissipated in the line terminating impedances 36.1, 36.2 and 38.1, 38.2 which are matched with the Z₀ of the relevant coupled lines. It will be appreciated that with the arrangement according to the invention, higher transmitted energizing signal power levels are possible, in that coupling of the forwardly propagating energizing signal to the demodulators 24,26 is controllable.

In figure 3, there is shown a more detailed diagram of the interrogator 12, which will be clear to a person skilled in the art.

It will be appreciated that there are many variations in detail on the interrogator and system according to the invention without departing from the scope and spirit of the appended claims.

## Claims

1. An interrogator for an electronic radio frequency identification system, the interrogator comprising:
- an antenna;
- a signal generator for generating a first signal;
- a transmission line connecting the generator to the antenna to provide a path for the first signal to propagate in a first direction towards the antenna for transmission thereby; and
- at least a first demodulator coupled to the transmission line by first directional coupling means;
- the first directional coupling means being operative to attenuate at the first demodulator signals propagating in the first direction, but to couple to the first demodulator signals propagating in a reverse direction, said signals comprising a second signal received via the antenna and a reflection of the first signal from the antenna; and
- the first demodulator being operative to demodulate the second signal utilizing the reflection of the first signal.

2. An interrogator as claimed in claim 1, wherein the first signal is an energizing signal for energizing passive transponders to be read and the second signal is a response signal from a transponder.

3. An interrogator as claimed in claim 1 or claim 2 wherein a second demodulator is coupled to the transmission line by a second directional coupling means, the first and second coupling means being spaced along the line, so that the first and second demodulators provide phase diversified demodulated signals.

4. An interrogator as claimed in any one of claims 1 to 3 wherein an input impedance of the antenna is mismatched to reflect some of the forwardly propagating first signal back towards the transmitter, to provide the aforementioned reflection.

5. An interrogator as claimed in claim 3 or claim 4 wherein the demodulators are balanced and arranged to utilize the reflection as a local oscillator signal and to convert the second signal directly to baseband.

6. An interrogator as claimed in any one of claims 1 to 5 wherein the transmission line is a strip line.

7. An interrogator as claimed in claim 6 wherein each of the first and second directional coupling means comprises first and second coupled lines provided adjacent the strip line.

8. An interrogator as claimed in claim 7 wherein the first and second coupled lines of the first and second coupling means are interleaved.

9. An interrogator as claimed in claim 7 wherein the first and second coupled lines of the first coupling means are adjacent to one another, but spaced from one another; and the first and second coupled lines of the second coupling means are adjacent to one another and spaced from the first and second coupled lines of the first coupling means.

10. An electronic identification system comprising a plurality of passive RF transponders and an interrogator as claimed in any one of claims 1 to 9.

11. A method of processing signals in an interrogator of an electronic identification system, the method comprising the steps of:
- generating a first signal and causing it to propagate in a first direction along a transmission line before being transmitted via an antenna;
- receiving modulated response signals in response to the first signal from transponders forming part of the system via the antenna and causing them to propagate in a second or reverse direction along the transmission line;
- causing a part of the first signal to be reflected by the antenna in the reverse direction along the transmission line;
- directionally coupling the received response signals and the part of the first signal to at least one demodulator; and
- utilizing in the demodulator the part of the first signal to demodulate the response signals.
